(19) Europäisches Patentamt
European Patent Office
Office européen des brevets

(11) **EP 3 588 398 B1**

(12) **FASCICULE DE BREVET EUROPEEN**

(45) Date de publication et mention
de la délivrance du brevet:
**08.03.2023 Bulletin 2023/10**

(21) Numéro de dépôt: **19181713.9**

(22) Date de dépôt: **21.06.2019**

(51) Classification Internationale des Brevets (IPC):
***G06Q 10/00*** *(2006.01)*

(52) Classification Coopérative des Brevets (CPC):
**G06Q 10/20**

(54) **BANC D'ESSAI AVEC SYSTÈME DE MAINTENANCE ET PROCÉDÉ DE MAINTENANCE D'UN TEL BANC D'ESSAI**

PRÜFSTAND MIT WARTUNGSSYSTEM, UND WARTUNGSVERFAHREN EINES SOLCHEN PRÜFSTANDS

TEST BENCH WITH MAINTENANCE SYSTEM AND METHOD FOR MAINTENANCE OF SUCH A TEST BENCH

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.06.2018 BE 201805440**

(43) Date de publication de la demande:
**01.01.2020 Bulletin 2020/01**

(73) Titulaire: **Safran Aero Boosters SA**
**4041 Herstal (BE)**

(72) Inventeur: **LACROIX, Alain**
**4160 Anthisnes (BE)**

(74) Mandataire: **Lecomte & Partners**
**76-78, rue de Merl**
**2146 Luxembourg (LU)**

(56) Documents cités:
**EP-A1- 3 290 897      WO-A2-2019/028269**

## Description

### Domaine technique

L'invention concerne le domaine des turbomachines axiales et plus particulièrement les bancs d'essais pour turboréacteurs d'aéronefs. Plus précisément, l'invention concerne la gestion de la maintenance préventive des différents équipements d'un tel banc.

### Technique antérieure

Le document EP 3 290 897 A1 décrit un banc d'essai pour turbomachine. Un tel banc peut être muni d'un très grand nombre d'équipements, tels des capteurs, des éléments d'infrastructure ou d'architecture, des éléments isolants phoniques, de sécurité, etc.

La maintenance des équipements d'un tel banc peut être curative, c'est-à-dire qu'un capteur est remplacé lorsqu'il est détecté comme présentant une malfonction. La maintenance peut aussi être préventive au moyen d'inspections périodiques ou de détecteurs, anticipant les défaillances potentielles. Un banc peut comporter plusieurs milliers de capteurs et autant de câblage à maintenir en fonctionnement. Les interruptions pour effectuer des tâches de maintenance ou des inspections peuvent donc être potentiellement nombreuses et handicapantes pour l'utilisation du banc.

Le document WO 2019/028269 A3 décrit un appareil de surveillance, des systèmes et des procédés destinés à collecter des données dans un environnement industriel. Le système comprend un collecteur de données couplé en communication à une pluralité de canaux d'entrée et à une infrastructure de réseau et permet de réaliser de la maintenance prédictive.

### Résumé de l'invention

#### Problème technique

L'invention a pour objectif de minimiser les temps d'arrêt d'un banc d'essai de turbomachine en proposant un banc et un procédé mettant en jeu une maintenance prédictive améliorée.

#### Solution technique

L'invention a pour objet un procédé de maintenance d'un banc d'essai pour turbomachine, le banc d'essai comprenant un système de gestion de la maintenance prédictive et une pluralité d'équipements, le procédé comprenant les étapes suivantes : incrémentation d'une base de données comprenant des données relatives au banc et à son utilisation, détermination, pour chaque équipement, d'un indice qui varie en fonction du contenu de la base de données, génération d'une information qu'une action est à mener sur un équipement donné lorsque l'indice correspondant atteint un critère donné, et une étape de maintenance de l'équipement donné lors de laquelle l'action à mener est effectuée, préférentiellement par un opérateur.

La base de données ne comprend pas seulement des mesures instantanées mais également un historique des données. La considération de l'historique appuie le fait que ce ne sont pas seulement les données acquises à un instant donné qui sont prises en compte pour établir qu'un équipement nécessite une action d'entretien, mais bien le suivi de plusieurs données au cours du temps.

Le système de gestion comprend au moins les éléments software et hardware standard d'un ordinateur, avec au moins un processeur, au moins une mémoire et au moins une interface homme-machine.

Selon d'autres aspects de l'invention, le procédé peut comprendre une ou plusieurs des caractéristiques suivantes, prises isolément ou selon toutes les combinaisons techniques possibles :

- La formulation du critère se présente sous la forme de la conjonction de la présence de plusieurs paramètres dans un intervalle qui leur est propre et qui est propre à l'équipement.

- La formulation est complétée par la présence de chaque paramètre dans son intervalle propre pendant une durée donnée.

- La présence des paramètres dans les intervalles est pondérée pour calculer l'indice.

- Le critère est atteint lorsque l'indice atteint un indice critique.

- L'indice critique, les intervalles, les durées, les pondérations et/ou les paramètres pris en compte pour un équipement, sont mis à jour par le système de gestion.

- Le système analyse les données disponibles pour créer des paramètres.

L'invention concerne également un banc d'essai de turbomachine comprenant un système de gestion de la maintenance prédictive du banc, le banc comprenant une pluralité d'équipements et des moyens de maintenance de ces équipements, le système étant implémenté sur un dispositif informatique et étant configuré pour réaliser le procédé décrit ci-dessus, le système étant configuré pour incrémenter une base de données comprenant des données relatives au banc et à son utilisation, le système déterminant pour chaque équipement un indice qui varie en fonction du contenu de la base de données, le système générant l'information qu'une action est à mener sur un équipement donné lorsque l'indice correspondant atteint un critère donné.

Selon d'autres aspects de l'invention, le banc peut comprendre une ou plusieurs des caractéristiques suivantes, prises isolément ou selon toutes les combinaisons techniques possibles :

- Le critère déterminant qu'une action est à mener sur un équipement donné est lui-même incrémenté par le système. Ainsi, ce critère peut dynamiquement varier au cours de la vie du banc.

- Le critère consiste en la présence de paramètres relatifs au banc ou à son utilisation dans un intervalle donné pendant une durée donnée.

- Les données relatives à l'utilisation du banc comprennent les valeurs instantanées et passées des paramètres relatifs à la turbomachine testée et/ou aux turbomachines ayant été testées sur le banc, parmi lesquels au moins l'un des paramètres suivants : la puissance ou la poussée de la turbomachine, le type de machine, les cycles de tours/minute appliqués, le régime moteur instantané, la température des gaz d'échappement, la poussée instantanée, l'amplitude et/ou la fréquence des vibrations générées, les émissions acoustiques de la turbomachine, les émissions de gaz. Également, les pannes passées peuvent être analysées et répertoriées dans la base de données.

- Les données relatives au banc comprennent au moins l'un des paramètres suivants : la durée d'utilisation cumulée ou l'âge du banc, la nature des infrastructures comme notamment le type de béton utilisé ou les dimensions du banc, la présence de fissure dans les infrastructures, les émissions acoustiques mesurées à l'extérieur du banc, les émissions polluantes mesurées à l'extérieur du banc. Les cycles d'utilisation ou les cycles appliqués aux moteurs peuvent être répertoriés. Des fuites de lubrifiant moteur peuvent aussi être répertoriées car celles-ci peuvent être nuisibles pour les fondations du banc. La température extérieure peut être suivie également. Les dimensions ou la section de passage de l'air dans le banc peuvent aussi être un paramètre, certes invariable, mais important ainsi que le nombre de commutation des différentes vannes ou valves du banc.

- Les équipements comprennent au moins l'un des items suivants : les filtres acoustiques, les infrastructures et notamment les fondations en béton, les éléments de sécurité, le démarreur électromagnétique, les capteurs, les cartes d'acquisition, les logiciels.

- L'action à mener sur l'équipement est un remplacement de l'équipement et la confirmation auprès du système de gestion, du remplacement de l'équipement, le système étant configuré pour mettre à jour la base de données suite à ladite confirmation.

- L'action à mener sur l'équipement est une inspection de l'équipement et la confirmation auprès du système de gestion, du bon état de l'équipement, le système étant configuré pour mettre à jour la base de données suite à ladite confirmation.

- L'action à mener sur l'équipement est une réparation, un nettoyage, un reconditionnement, et/ou une révision de l'équipement et la confirmation auprès du système de gestion, que ladite action a été effectuée, le système étant configuré pour mettre à jour la base de données suite à ladite confirmation.

L'invention concerne également un réseau de plusieurs de ces bancs, remarquable en ce que lorsqu'une action est menée sur un équipement d'un des bancs, la base de données du banc en question est partagée aux autres bancs du réseau et la définition, en fonction de la base de données, du critère dudit équipement sur lequel une action a été menée, est mise à jour par auto-apprentissage sur tous les bancs du réseau.

Les caractéristiques techniques détaillées en rapport avec le banc sont aussi notamment des caractéristiques techniques du procédé et vice versa.

De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description, qui en plus sont combinables entre eux, selon toutes les combinaisons techniques possibles, à moins que le contraire ne soit explicitement mentionné.

Avantages apportés

Le système de gestion du banc permet d'employer une intelligence artificielle pour assister les opérations de maintenance d'un banc d'essai. En particulier, le système ne se limite pas à certains aspects du banc et permet donc d'établir un lien qui ne semblerait pas évident pour l'homme, entre les conditions d'utilisation et l'usure des équipements. Le système peut gérer une multitude d'information à la manière du Big Data et ainsi former un système de maintenance, parfois appelé 4.0, appliqué aux bancs d'essai de turbomachine.

**Brève description des dessins**

La figure 1 représente un banc d'essai de turbomachine axiale selon l'invention ;
La figure 2 illustre schématiquement un procédé employé par le système de gestion de la maintenance du banc d'essai selon l'invention.

**Description des modes de réalisation**

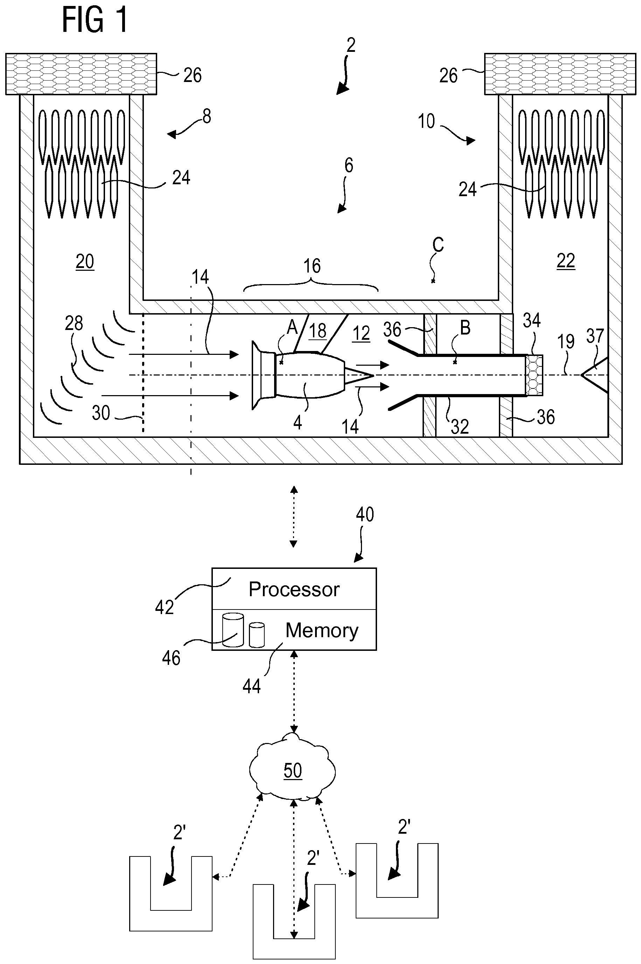

La figure 1 représente de manière simplifiée un banc d'essai 2 de moteur, plus particulièrement un banc d'essai 2 pour turboréacteur 4 d'avion. Le banc d'essai 2 pourrait éventuellement recevoir un avion complet, ou du moins une partie d'avion.

Le banc d'essai 2 forme une construction avec une infrastructure. Il comprend un passage 6 avec une entrée 8 et une sortie 10. Le passage 6 comprend un couloir 12 essentiellement allongé. Sa longueur peut être supérieure ou égale à 60 m. La longueur du couloir 12 permet la circulation en ligne droite d'un flux d'air 14 en limitant la formation de tourbillons nuisant à la qualité de l'essai.

Afin de limiter la résistance à l'écoulement au travers du couloir 12, en particulier la résistance s'opposant à l'entrée d'un flux d'air 14 dans la turbomachine 4, le couloir 12 peut présenter une section de passage supérieure ou égale à 50 m2. Le flux d'air 14 traversant le banc d'essai 2 peut être entraîné par la turbomachine 4 elle-même pendant sa phase de test. Une zone d'installation 16 de la turbomachine 4 est prévue. La zone d'installation 16 peut être une zone de fixation de la turbomachine 4. Elle peut être munie d'un système de fixation 18 auquel la turbomachine 4 est fixée pendant son test. Le système 18 peut s'étendre verticalement depuis le plafond du couloir 12, à la manière d'une colonne ou d'un poteau. Le système 18 permet de monter la turbomachine 4 avec un déport, et de centrer cette dernière par rapport au milieu du couloir 12, notamment par rapport à un axe central 19 du couloir 12.

Le couloir 12 peut être délimité par des cheminées verticales 20, 22 en entrée 8 et en sortie 10. Elles permettent une admission d'air et un échappement tous deux verticaux et en élévation par rapport au couloir 12. Pour réduire les nuisances sonores, elles peuvent comporter des baffles sonores 24, ou lames acoustiques 24, permettant d'absorber des ondes sonores de manière passive.

Des dispositifs 26 complémentaires peuvent être présents en entrée 8 et en sortie 10 pour éviter des inversions d'écoulements, qui perturberaient les conditions de tests. La configuration en « U » n'est qu'un exemple non limitatif.

A la jonction entre la cheminée amont et le couloir 12, le banc 2 est équipé d'une série de lames de déviation 28. Elles permettent de renvoyer l'air descendant de la cheminée d'entrée 20 dans une direction horizontale. En entrée du couloir 12, le banc 2 présente optionnellement une grille 30 permettant d'intercepter des débris susceptibles de perturber l'essai et d'endommager la turbomachine 4.

En aval de la turbomachine 4, le banc 2 comporte un tube 32 collectant le flux d'air 14 propulsé par la turbomachine 4 et les gaz d'échappement. Le tube collecteur 32 contribue à absorber le bruit généré lors de l'essai. Le tube collecteur 32 comprend un diffuseur 34 à sa sortie. Le diffuseur 34 peut être dans la cheminée de sortie 22.

Le tube collecteur 32 peut être maintenu dans le banc 2 à l'aide de deux cloisons 36. Ces cloisons 36 s'étendent verticalement et transversalement dans le couloir 12. Elles forment des séparations étanches, qui permettent de contenir le flux 14 issu la turbomachine 4.

Pour dévier le flux issu du tube collecteur 32, et du diffuseur 34, un cône 37 peut être mis dans le prolongement du tube collecteur 32. Il peut être fixé à une paroi verticale en fin de couloir 12. Sa pointe peut coïncider avec l'axe central 19.

Le banc 2 comprend également un très grand nombre d'équipements du type capteur ou éléments de construction, notamment. Par exemple, un capteur de vitesse A de rotation du moteur 4, un capteur B de gaz d'échappement et un capteur sonore C à l'extérieur du passage de gaz.

Le banc 2 comprend enfin un système de gestion de la maintenance 40. Celui-ci peut être implémenté sur ordinateur, comprenant un processeur 42 et une mémoire 44 pour stocker des informations sous forme de bases de données 46. Dans les bases de données peuvent être enregistrées toutes les données utiles à la gestion de la maintenance, parmi lesquelles l'historique des différents paramètres mesurés ou estimés. À partir de ces paramètres, le système de gestion de la maintenance établit si tel ou tel équipement nécessite une opération de maintenance.

Le système de gestion est connecté, via des réseaux 50 à d'autres bancs d'essais 2', afin que les systèmes de gestion puissent s'influencer les uns les autres sur leur façon d'estimer la durée de vie de chaque équipement.

Les paragraphes suivants illustrent un exemple de fonctionnement du système de gestion.

Le système permet de déterminer qu'un certain nombre de paramètres influent sur un de ses équipements, par exemple sur l'équipement A. Ces paramètres sont au nombre de n, et sont notés $p_{1A}$, $p_{2A}$, ... $p_{nA}$. Au fur et à mesure de la vie du système de gestion, les paramètres sont affinés (supprimés ou rajoutés). Certains paramètres ont des valeurs mesurables (par exemple la température instantanée des gaz d'échappement). Certains autres paramètres peuvent être prédéfinis pour évoluer avec le temps (par exemple l'âge du banc). Enfin, certains paramètres ne correspondent pas à une valeur chiffrable (par exemple la qualité du béton employé pour les fondations du banc) mais cette donnée non chiffrée peut être modélisée initialement par une courbe d'usure variant en fonction du temps, entre un état neuf (prenant par exemple une valeur 0 et un état usé prenant par exemple la valeur 1).

Pour chacun des paramètres p sont définis un intervalle $[\alpha,\beta]$ et optionnellement une durée t. Lorsque tous les paramètres $p_{1A}$, $p_{2A}$, ... $p_{nA}$ sont dans leurs intervalles respectifs $[\alpha_{1A},\beta_{1A}]$, $[\alpha_{2A},\beta_{2A}]$, ..., $[\alpha_{nA},\beta_{nA}]$ pendant une durée supérieure ou égale à leurs durées respectives $t_{1A}$, $t_{2A}$, ..., $t_{nA}$, alors le critère où une action est à mener sur l'équipement A est atteint.

On peut définir un indice $i_A$ de l'équipement A qui aura par exemple la valeur 1 dans ces conditions, et la valeur 0 lorsqu'au moins un des paramètres $p_{1A}$, $p_{2A}$, ... $p_{nA}$ n'est pas dans l'intervalle requis $[\alpha_{1A},\beta_{1A}]$, $[\alpha_{2A},\beta_{2A}]$, ..., $[\alpha_{nA},\beta_{nA}]$ ou y est pendant/depuis un temps inférieur au temps requis $t_{1A}$, $t_{2A}$, ..., $t_{nA}$. Le critère sera donc une valeur de l'indice $i_A$ égale à 1.

Alternativement, le critère peut être une valeur d'indice différente de 1, que l'on peut nommer indice critique $i_{AC}$, avec par exemple $i_{AC}=0.75$. Ainsi, s'il y a 8 paramètres pris en compte pour l'équipement A, il suffit que 6 de ces paramètres soient dans l'intervalle voulu pour qu'une action soit à mener sur l'équipement A.

Comme tous les paramètres n'ont pas nécessairement le même poids dans l'impact qu'ils ont sur la nécessité d'effectuer une action de maintenance sur un équipement donné, il peut être nécessaire de pondérer ces paramètres.

Ainsi, il est possible de formuler la valeur de l'indice de l'équipement A de la façon suivante :

$$i_A = \frac{1}{\sum_{j=1}^{j=n} \gamma_{jA}} [\gamma_{1A} \quad \gamma_{2A} \quad ... \quad \gamma_{nA}]. \begin{bmatrix} p_{1A} \in [\alpha_{1A}; \beta_{1A}]t_{1A} \\ p_{2A} \in [\alpha_{2A}; \beta_{2A}]t_{2A} \\ ... \\ p_{nA} \in [\alpha_{nA}; \beta_{nA}]t_{nA} \end{bmatrix}$$

La matrice de gauche comprend les facteurs de pondération $\gamma$ à appliquer sur chaque paramètre.

La ligne j de la matrice de droite aura pour valeur 1 si le paramètre $p_j$ est dans l'intervalle $[\alpha_{jA},\beta_{jA}]$, depuis une durée d'au moins $t_{jA}$. Sinon, la valeur de la ligne j est 0. Optionnellement, pour le cas des paramètres ne correspondant pas à une valeur chiffrable, la ligne j de la matrice de droite pourra avoir une valeur comprise dans l'intervalle [0 ;1].

Le ratio $1/\Sigma$ en début de ligne est optionnel et n'est utilisé que pour que l'indice ait une valeur comprise entre 0 et 1.

Ainsi, le système peut se donner une valeur critique de $i_A$, notée $i_{AC}$ et comprise entre 0 et 1, au-delà de laquelle le critère requis pour déclencher une opération de maintenance de l'équipement A est atteint, soit lorsque $i_A \geq i_{AC}$.

Pour chacun des équipements du banc (notés par exemple A, B, ... Z), les valeurs de p, $\alpha$, $\beta$, t, $\gamma$ et ic sont mises à jour au cours de la vie du banc et/ou en fonction des informations reçues d'un autre banc issu du même réseau de bancs.

Pour donner un exemple concert, une illustration hypothétique est décrite ci-après. Un banc d'essai peut comprendre un capteur de la vitesse de rotation du moteur, noté capteur A. Par exemple, l'amplitude des vibrations selon la direction verticale peut être le paramètre $p_1$ ; l'intensité du bruit formé à l'extérieur du banc peut être un autre paramètre $p_2$ et la poussée générée par le moteur peut être un critère $p_3$. La richesse de l'invention réside dans le fait que tous les paramètres peuvent être pris en compte, même ceux que l'homme du métier ne considérerait pas comme pertinent de prime à bord. Dans cet exemple, le système peut, soit initialement, soit après apprentissage, considérer que le critère $p_3$ est prédominant et donc lui attribuer le coefficient de pondération 5, les deux autres critères ayant un coefficient de pondération de 2.

Dans cet exemple, par apprentissage, le système a établi que le capteur A est usé lorsque les déplacements liés aux vibrations sont supérieurs à 3 mm pendant au moins 10 secondes ; lorsque le niveau sonore est compris entre 104 dB et 128 dB pendant plus d'une minute et que la poussée est supérieure à 300kN pendant plus de 30h.

Dans ces conditions, l'indice du capteur A est calculé de la façon suivante :

$$i_A = \frac{1}{2+2+5}\begin{bmatrix} 2 & 2 & 5 \end{bmatrix}.\begin{bmatrix} \text{déplacements liés aux } vibrations \in [3mm; \propto[ \text{ pendant } 10s \\ bruit \in [104dB; 128dB] \text{ pendant } 60s \\ poussée \in [300kN; \propto[ \text{ pendant } 30h \end{bmatrix}$$

En admettant qu'à un instant donné, les deux derniers paramètres (bruit et poussée) sont dans les intervalles indiqué depuis la durée indiquée, la valeur de $i_A$ est :

$$i_A = \frac{1}{9}\begin{bmatrix} 2 & 2 & 5 \end{bmatrix}.\begin{bmatrix} 0 \\ 1 \\ 1 \end{bmatrix} = \frac{7}{9} \approx 0.77$$

Si à cet instant, l'indice critique $i_{AC}$ est de 0.75, alors l'indice $i_A$ étant supérieur à l'indice critique $i_{AC}$, le critère pour générer l'information du besoin d'opérer une action sur le capteur A est rempli.

Cet exemple illustre bien que la pondération permet d'inciter à la réformation ou la révision d'un équipement alors même que tous les paramètres n'ont pas nécessairement atteint les intervalles qui leur sont propres.

Le système est configuré pour faire évoluer au besoin les valeurs des intervalles, des durées, des pondérations et des valeurs critiques, pour chacun des équipements.

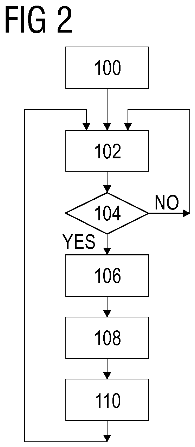

Ainsi, la figure 2 décrit une procédure possible pour le système de gestion. Lors d'une étape d'initialisation 100, les paramètres à considérer pour chaque équipement et les valeurs par défaut de $\alpha$, $\beta$, t, $\gamma$ et $i_C$ sont définis. Cette étape peut coïncider avec l"étalonnage des équipements.

Ensuite, une étape de suivi et de contrôle 102 consiste en l'acquisition et/ou le calcul des paramètres p. Lors de cette étape sont aussi calculés les indices i pour chaque équipement.

À l'étape 104, les indices i sont comparés aux indices critiques ic des équipements correspondants.

Si, pour un équipement donné, $i \geq i_C$, alors la procédure continue à l'étape 106 pour cet équipement. À l'étape 106, l'utilisateur est averti que l'équipement doit subir une opération de maintenance. À l'étape 108, l'utilisateur effectue l'opération nécessaire et confirme cela au système. À l'étape 110, le système met à jour ses bases de données et notamment les valeurs de $\alpha$, $\beta$, t, $\gamma$ et $i_C$ et les paramètres p nécessaires au suivi de l'équipement en question. Le système communique ces informations aux autres bancs d'essai 2' du réseau. La procédure se poursuit en revenant à l'étape 102.

Si par contre $i < i_C$, alors la procédure revient à l'étape de suivi et de contrôle 102 sans avertir l'utilisateur d'un besoin d'une opération de maintenance. Optionnellement, une étape de mise à jour semblable à l'étape 110 peut avoir lieu également avant le retour à l'étape 102.

Bien que la procédure soit présentée sous forme d'étapes successives, il est à noter que toutes les étapes se passent à chaque instant et pour tous les équipements : un paramètre peut être mesuré alors qu'une mise à jour est faite, par exemple due à des informations provenant d'un autre banc 2'.

Si le système peut supprimer un paramètre de la matrice, lorsqu'il estime que ce paramètre n'a aucune influence sur l'usure d'un équipement, le système peut également intégrer des paramètres voir créer ses propres paramètres.

En analysant les valeurs de toutes les données disponibles, le système peut par exemple établir qu'un équipement F est remplacé à chaque fois que le paramètre $p_{rD}$ (r-ième paramètre de l'équipement D) est compris dans un intervalle donné, et que le paramètre $p_{sE}$ (s-ième paramètre de l'équipement E) est compris dans un intervalle donné. Le système construira donc un nouveau paramètre pour l'équipement F, qui vaudra 1 lorsque $p_{rD}$ et $p_{sE}$ seront dans ces intervalles donnés respectifs. Au cours du temps, la pondération $\gamma_{rDsE}$ de ce nouveau paramètre $p_{rDsE}$ et le poids de $p_{rD}$ et $p_{sE}$ dans ce nouveau paramètre $p_{rDsE}$ pourront évoluer en fonction de la pertinence que le système trouvera à ce nouveau paramètre.

Ainsi, le système va développer au fur et à mesure du temps ses propres paramètres et ses propres règles pour optimiser la maintenance. Les règles peuvent devenir très complexes en peu de temps et combiner plusieurs dizaines de paramètres avec des intervalles respectifs et des durées respectives associés à chacun de ces paramètres combinés. Malgré tout, à chaque instant, le système permet d'être interrogé par l'utilisateur pour extraire une formulation des critères utilisés par le système.

L'utilisateur peut forcer certains choix pour p, $\alpha$, $\beta$, t, $\gamma$ et $i_C$ pour rester maître des opérations de maintenance.

Les différents systèmes de différents bancs communiquent de manière à ce que les intelligences artificielles coopèrent. Des protocoles de répartition du calcul entre les différents bancs peuvent être utilisés.

**Revendications**

1. Réseau de plusieurs bancs d'essai (2) de turbomachine, chaque banc d'essai (2) de turbomachine (4) comprenant un système de gestion (40) de la maintenance prédictive du banc (2), chaque banc (2) comprenant une pluralité d'équipements (A, B, C, ...) et des moyens de maintenance de ces équipements, le système (40) étant implémenté sur un dispositif informatique et étant configuré pour réaliser un procédé de maintenance,

   le procédé comprenant les étapes suivantes :

   - évaluation de n paramètres ($p_{1A}$, $p_{2A}$, ... $p_{nA}$) relatifs à un équipement (A, B, C...) du banc et à son utilisation, les n paramètres comprenant des paramètres dont la valeur numérique est obtenue à partir de mesures à un instant donné et des paramètres dont la valeur est prédéterminée à l'instant donné ;
   - incrémentation, avec les paramètres ainsi évalués, d'une base de données (46) comprenant des données relatives au banc et à son utilisation ;
   - détermination, à un instant donné et pour chaque équipement, d'un indice ($i_A$) qui dépend du contenu de la base de données (46) à cet instant ainsi qu'aux instants passés, selon la formulation suivante :

$$i_A = \frac{1}{\sum_{j=1}^{j=n} \gamma_{jA}} [\gamma_{1A} \quad \gamma_{2A} \quad \cdots \quad \gamma_{nA}] . \begin{bmatrix} p_{1A} \in [\alpha_{1A}; \beta_{1A}] t_{1A} \\ p_{2A} \in [\alpha_{2A}; \beta_{2A}] t_{2A} \\ \cdots \\ p_{nA} \in [\alpha_{nA}; \beta_{nA}] t_{nA} \end{bmatrix}$$

   dans laquelle les coefficients $\gamma$ sont des facteurs de pondération à appliquer sur chaque paramètre respectivement ; la ligne j de la matrice a pour valeur 1 si le paramètre $p_j$ issu d'une mesure est présent dans l'intervalle prédéfini [$\alpha_{jA}$,$\beta_{jA}$] depuis une durée d'au moins $t_{jA}$; sinon, la valeur de la ligne j est 0 ; et lorsque le paramètre $p_j$ est estimé par prédétermination, la ligne j de la matrice a la valeur de $p_j$ ;

   - génération (106) d'une information qu'une action est à mener sur un équipement (A, B, C, ...) donné lorsque l'indice ($i_A$) de l'équipement (A) correspondant est supérieur ou égal à un critère donné ($i_{AC}$),

   le procédé comprenant en outre, suite à la génération (106) de l'information, une étape de maintenance de l'équipement donné (A) lors de laquelle l'action à mener est effectuée, préférentiellement par un opérateur ; le réseau étant tel que lorsqu'une action est menée sur un équipement (A, B, C, ...) d'un des bancs (2), la base de données du banc (2) en question est partagée aux autres bancs (2') du réseau et la définition (p, $\alpha$, $\beta$, t, $\gamma$ et $i_C$), en fonction de la base de données, du critère dudit équipement (A, B, C, ...) sur lequel une action a été menée, est mise à jour par auto-apprentissage sur tous les bancs (2, 2') du réseau.

2. Réseau selon la revendication 1, **caractérisé en ce que** le critère (ic) déterminant qu'une action est à mener sur un équipement donné est lui-même incrémenté par le système (40).

3. Réseau selon l'une des revendications 1 ou 2, **caractérisé en ce que** les données relatives à l'utilisation du banc (2) comprennent les valeurs instantanées et passées des paramètres (p) relatifs à la turbomachine (4) testée et/ou aux turbomachines (4) ayant été testées sur le banc, parmi lesquels au moins l'un des paramètres suivants : la puissance ou la poussée de la turbomachine (4), le régime moteur instantané, la température des gaz d'échappement, la poussée instantanée, l'amplitude et/ou la fréquence des vibrations générées, les émissions acoustiques de la turbomachine, les émissions de gaz.

4. Réseau selon l'une des revendications 1 à 3, **caractérisé en ce que** lesdites données relatives au banc (2) comprennent au moins l'un des paramètres suivants : la durée d'utilisation cumulée ou l'âge du banc (2), la nature des infrastructures comme notamment le type de béton utilisé ou les dimensions du banc, la présence de fissure dans les infrastructures, les émissions acoustiques mesurées à l'extérieur du banc, les émissions polluantes mesurées à l'extérieur du banc.

5. Réseau selon l'une des revendications 1 à 4, **caractérisé en ce que** les équipements (A, B, C, ...) comprennent au moins l'un des items suivants : les filtres acoustiques (26), les infrastructures (6, 8, 10, 12, 16, 18, 20, 22, 36) et notamment les fondations en béton, les éléments de sécurité, le démarreur électromagnétique, les capteurs (A, B, C), les cartes d'acquisition, les logiciels.

**6.** Réseau selon l'une des revendications 1 à 5, **caractérisé en ce que** l'action à mener sur l'équipement (A, B, C, ...) est au moins l'une des actions suivantes :

un remplacement de l'équipement (A, B, C, ...) et la confirmation auprès du système de gestion, du remplacement de l'équipement (A, B, C, ...), le système étant configuré pour mettre à jour la base de données suite à ladite confirmation ;

une inspection de l'équipement (A, B, C, ...) et la confirmation auprès du système de gestion, du bon état de l'équipement (A, B, C, ...), le système étant configuré pour mettre à jour la base de données suite à ladite confirmation ;

une réparation, un nettoyage, un reconditionnement, et/ou une révision de l'équipement (A, B, C, ...) et la confirmation auprès du système de gestion, que ladite action a été effectuée, le système étant configuré pour mettre à jour la base de données suite à ladite confirmation.

**7.** Réseau selon l'une des revendications 1 à 6, **caractérisé en ce que** l'indice critique ($i_{AC}$), les intervalles ($[\alpha_{jA}, \beta_{jA}]$), les durées ($t_{jA}$), les pondérations ($\gamma_{jA}$) et/ou les paramètres ($p_{jA}$) pris en compte pour un équipement donné (A), sont mis à jour par le système de gestion (40).

**8.** Réseau selon l'une des revendications 1 à 7, **caractérisé en ce que** le système de gestion analyse les données disponibles pour créer des paramètres.

**Patentansprüche**

**1.** Ein Netzwerk aus einer Vielzahl von Testständen (2) von Turbomaschinen (4), wobei jeder Teststand (2) von Turbomaschinen (4) ein Verwaltungssystem (40) für die prädiktive Wartung des Teststandes (2) umfasst, wobei jeder Teststand (2) eine Vielzahl von Ausrüstungen (A, B, C, ...) und Mittel zur Wartung dieser Ausrüstungen umfasst, wobei das System (40) auf einer Computervorrichtung eingesetzt wird und so gestaltet ist, dass es ein Wartungsverfahren umsetzt,

wobei das Verfahren die folgenden Schritte umfasst:

- Bewertung von n Parametern ($p_{1A}$, $p_{2A}$, ... $p_{nA}$) die sich auf eine Ausrüstung (A, B, C...) des Standes und auf ihre Verwendung beziehen, wobei die n Parameter solche umfassen, deren numerischer Wert auf der Grundlage von zu einem bestimmten Zeitpunkt durchgeführten Messungen erhalten wird, und solche, deren Wert zu diesem Zeitpunkt vorgegeben ist;

- Erweiterung einer Datenbank (46), die Daten bezüglich des Standes und seiner Verwendung enthält, um die so ausgewerteten Parameter;

- Festlegung eines Index ($i_A$) zu einem bestimmten Zeitpunkt und für jedes Gerät, der vom Inhalt der Datenbank (46) sowohl zu diesem Zeitpunkt als auch zu früheren Zeitpunkten abhängt, unter Verwendung der folgenden Formel:

$$i_A = \frac{1}{\sum_{j=1}^{j=n} \gamma_{jA}} \begin{bmatrix} \gamma_{1A} & \gamma_{2A} & \cdots & \gamma_{nA} \end{bmatrix} . \begin{bmatrix} p_{1A} \in [\alpha_{1A}; \beta_{1A}] t_{1A} \\ p_{2A} \in [\alpha_{2A}; \beta_{2A}] t_{2A} \\ \cdots \\ p_{nA} \in [\alpha_{nA}; \beta_{nA}] t_{nA} \end{bmatrix}$$

wobei die Koeffizienten $\gamma$ Gewichtungsfaktoren darstellen, die auf jeden Parameter anzuwenden sind; die Zeile j der Matrix hat den Wert 1, wenn der aus einer Messung resultierende Parameter $p_j$ für eine Dauer von mindestens $t_{jA}$ in den vorgegebenen Bereich [$\alpha_{jA}$, $\beta_{jA}$] fällt; andernfalls ist der Wert der Zeile j 0; und wenn der Parameter $p_j$ standardmäßig geschätzt wird, hat die Zeile j der Matrix den Wert Pi ;

- das Erzeugen (106) einer Information, dass ein Eingriff an einer bestimmten Ausrüstung (A, B, C, ...) durchgeführt werden muss, wenn der Index ($i_A$) der entsprechenden Ausrüstung (A) größer oder gleich einem bestimmten Kriterium ($i_{AC}$) ist,

wobei das Verfahren außerdem nach der Erzeugung (106) der Informationen einen Schritt zur Wartung der gegebenen Ausrüstung (A) umfasst, bei dem der auszuführende Eingriff vorzugsweise durch einen Bediener durchgeführt wird; wobei das Netzwerk so ausgelegt ist, dass, wenn ein Eingriff an einem Gerät (A, B, C, ... ) eines der Stände (2) durchgeführt wird, die Datenbank des betreffenden Standes (2) mit den anderen Ständen (2') des Netzwerks geteilt wird und die Definition (p, $\alpha$, $\beta$, t, $\gamma$, und $i_C$) des Kriteriums des jeweiligen Geräts (A, B, C, ...), an dem ein Eingriff durchgeführt wurde, gemäß der Datenbank durch Selbstlernen in allen Ständen (2, 2') des Netzwerks aktualisiert wird.

2. Das Netzwerk nach Anspruch 1, **dadurch gekennzeichnet, dass** das Kriterium (ic), auf dessen Grundlage bestimmt wird, dass einen Eingriff an einem gegebenen Gerät durchgeführt werden soll, selbst vom System (40) inkrementiert wird.

3. Das Netzwerk nach einem der Ansprüche 1 oder 2, **dadurch gekennzeichnet, dass** die Daten über die Nutzung des Prüfstands (2) die aktuellen und früheren Werte der Parameter (p) der getesteten Turbomaschine (4) und/oder der auf dem Prüfstand getesteten Turbomaschine (4) umfassen, einschließlich mindestens eines der folgenden Parameter: Leistung oder Schubkraft der Turbomaschine (4), momentane Motordrehzahl, Abgastemperatur, momentane Schubkraft, Amplitude und/oder Frequenz der erzeugten Vibrationen, Geräuschemissionen der Turbomaschine, Abgasemissionen.

4. Das Netzwerk nach einem der Ansprüche 1 bis 3, **dadurch gekennzeichnet, dass** die Daten, die sich auf den Stand (2) beziehen, mindestens einen der folgenden Parameter umfassen: kumulierte Lebensdauer oder Alter des Standes (2), Art der Infrastrukturen, insbesondere die Sorte des verwendeten Betons oder die Abmessungen des Standes, Auftreten von Rissen in den Infrastrukturen, außerhalb des Standes gemessene Lärmemissionen, außerhalb des Standes gemessene Schadstoffemissionen.

5. Das Netzwerk nach einem der Ansprüche 1 bis 4, **dadurch gekennzeichnet, dass** die Ausrüstung (A, B, C, ...) mindestens eines der folgenden Elemente umfasst: akustische Filter (26), Infrastrukturen (6, 8, 10, 12, 16, 18, 20, 22, 36), insbesondere Betonfundamente, Sicherheitselemente, elektromagnetische Startvorrichtung, Sensoren (A, B, C), Datenerfassungskarten, Software.

6. Das Netzwerk nach einem der Ansprüche 1 bis 5, **dadurch gekennzeichnet, dass** der an der Ausrüstung (A, B, C, ...) vorzunehmende Eingriff aus mindestens einem der folgenden Schritte besteht:

   - Austausch der Ausrüstung (A, B, C, ...) und Bestätigung des Austauschs der Ausrüstung (A, B, C, ...) im Verwaltungssystem, wobei das System so gestaltet ist, dass es die Datenbank nach einer solchen Bestätigung aktualisiert;
   - Überprüfung der Ausrüstung (A, B, C, ...) und Bestätigung des guten Zustands der Ausrüstung (A, B, C, ...) im Verwaltungssystem, wobei das System so gestaltet ist, dass es die Datenbank nach einer solchen Bestätigung aktualisiert;
   - Reparatur, Reinigung, Instandsetzung und/oder Überholung von Geräten (A, B, C, ...) und Bestätigung im Verwaltungssystem, dass dieser Eingriff durchgeführt wurde, wobei das System so gestaltet ist, dass es die Datenbank nach einer solchen Bestätigung aktualisiert.

7. Das Netzwerk nach einem der Ansprüche 1 bis 6, **dadurch gekennzeichnet, dass** der kritische Index ($i_{AC}$), die Intervalle [$\alpha_{jA}$, $\beta_{jA}$], die Dauern ($t_{jA}$), die Gewichte ($\gamma_{jA}$) und/oder die Parameter ($p_{jA}$), die für eine bestimmte Ausrüstung (A) berücksichtigt werden, durch das Verwaltungssystem (40) aktualisiert werden.

8. Das Netzwerk nach einem der Ansprüche 1 bis 7, **dadurch gekennzeichnet, dass** das Verwaltungssystem die verfügbaren Daten analysiert, um Parameter zu erstellen.

**Claims**

1. Network of several test benches (2) for a turbomachine, each test bench (2) for a turbomachine (4) comprising a system (40) for managing the predictive maintenance of the bench (2), each bench (2) comprising a plurality of appliances (A, B, C, ...) and means to maintain these appliances, the system (40) being implemented on a computing device and being configured to carry out a maintenance method, the maintenance method comprising the following steps:

   - estimate n parameters ($p_{1A}$, $p_{2A}$, ..., $p_{nA}$) corresponding to a respective appliance (A, B, C...) of the test bench and its use, the n parameters comprising parameters of which the value is obtained from measurements at a given time and parameters of which the value is pre-determined at that given time;
- increment, with the estimated parameters, a database (46) including data relating to the bench and its use;
- determine, at a given time and for each appliance, an index ($i_A$) which varies according to the content of the database (46) at that given time as well as at preceding times according to the following formula:

$$i_A = \frac{1}{\sum_{j=1}^{j=n} \gamma_{jA}} \begin{bmatrix} \gamma_{1A} & \gamma_{2A} & \cdots & \gamma_{nA} \end{bmatrix} \cdot \begin{bmatrix} p_{1A} \in [\alpha_{1A}; \beta_{1A}] t_{1A} \\ p_{2A} \in [\alpha_{2A}; \beta_{2A}] t_{2A} \\ \cdots \\ p_{nA} \in [\alpha_{nA}; \beta_{nA}] t_{nA} \end{bmatrix}$$

in which the coefficients $\gamma$ are weighting factors to be applied to each parameter respectively; the row j of the matrix has the value of 1 if the parameter $p_j$ resulting from a measurement has been present in the predefined interval $[\alpha_{jA}, \beta_{jA}]$ for a duration of at least $t_{jA}$; otherwise, the value of the row j is 0; and when the parameter $p_j$ is estimated by predetermination, the row j of the matrix has the value of $p_j$;
- generating (106) an information that an action is to be carried out on a given appliance (A, B, C, ...) when the index ($i_A$) of the corresponding appliance (A) is greater than or equal to a given criterion ($i_{AC}$),

the method further comprising, following the generation (106) of the information, a step of maintenance of the given appliance (A) during which the action to be taken is carried out, preferably by an operator; the network being such that when an action is carried out on a piece of appliance (A, B, C, ...) of one of the benches (2), the database of the bench (2) in question is shared with the other benches (2') of the network and the definition (p, $\alpha$, $\beta$, t, $\gamma$ et $i_C$), as a function of the database, of the criterion of the said piece of appliance (A, B, C, ...) on which an action was carried out, is updated by means of self-learning on all of the benches (2, 2') of the network.

2. Network according to claim 1, **characterized in that** the criterion (ic) determining that an action is to be performed on a given appliance is itself incremented by the system (40).

3. Network according to one of claims 1 or 2, **characterized in that** the data relating to the use of the bench (2) comprise the instantaneous and past values of the parameters (p) relative to the turbomachine (4) tested and/or turbomachines (4) having been tested on the bench, among which at least one of the following parameters: the power or the thrust of the turbomachine (4), the instantaneous engine speed, the temperature of the exhaust gases, the instantaneous thrust, the amplitude and/or the frequency of the vibrations generated, the acoustic emissions of the turbomachine, the gas emissions.

4. Network according to one of claims 1 to 3, **characterized in that** said data relating to the bench (2) comprise at least one of the following parameters: the cumulative duration of use or the age of the bench (2), the nature of the infrastructures, such as the type of concrete used or the dimensions of the bench, the presence of cracks in the infrastructures, the acoustic emissions measured outside the bench, and the pollutant emissions measured outside the bench.

5. Network according to one of claims 1 to 4, **characterized in that** the appliances (A, B, C, ...) comprises at least one of the following items: acoustic filters (26), infrastructures (6, 8, 10, 12, 16, 18, 20, 22, 36) and in particular the concrete foundations, the safety elements, the electromagnetic starter, the sensors (A, B, C), the acquisition cards, the software.

6. Network according to one of claims 1 to 5, **characterized in that** the action to be performed on the appliance (A, B, C, ...) is at least one of:

a replacement of the appliance (A, B, C, ... ) and the confirmation with the management system of the replacement of the appliance (A, B, C, ...), the system being configured to update the database following said confirmation;
an inspection of the appliance (A, B, C, ... ) and the confirmation with the management system of the inspection of the appliance (A, B, C, ...), the system being configured to update the database following said confirmation;
a repair, a cleaning, a repackaging, and/or a revision the appliance (A, B, C, ...) and the confirmation of said action by the management system, the system being configured to update the database following said confirmation.

7. Network according to any of claims 1 to 6, **characterized in that** the critical index ($i_{AC}$), the ranges ($[\alpha_{jA},\beta_{jA}]$), the durations ($t_{jA}$), the weighting factors ($\gamma_{jA}$) and/or the parameters ($p_{jA}$) that are taken under consideration for a given appliance (A), are updated by the management system (40).

8. Network according to any of claims 1 to 7, **characterized in that** the management system analyses the available data to create parameters.

# FIG 1

Processor

42

46

Memory

44

40

50

# FIG 2

```
        ┌──────────┐
        │   100    │
        └────┬─────┘
   ┌─────────┼─────────┐
   │    ┌────▼────┐    │
   │    │   102   │    │
   │    └────┬────┘    │
   │         │         │
   │       ◇─▼─◇   NO  │
   │      ◇ 104 ◇──────┘
   │       ◇───◇
   │      YES  │
   │    ┌──────▼──┐
   │    │   106   │
   │    └────┬────┘
   │    ┌────▼────┐
   │    │   108   │
   │    └────┬────┘
   │    ┌────▼────┐
   │    │   110   │
   │    └────┬────┘
   └─────────▼
```

**EP 3 588 398 B1**

**RÉFÉRENCES CITÉES DANS LA DESCRIPTION**

**Documents brevets cités dans la description**

- EP 3290897 A1
- WO 2019028269 A3